# FASCICULE DE BREVET EUROPEEN

(11) **EP 0 961 048 B1**
(45) Date de publication et mention de la délivrance du brevet: **16.04.2003**
(21) Numéro de dépôt: 99401260.7
(22) Date de dépôt: 26.05.1999
(51) Int. Cl.: F16F 13/18

(54) **Support antivibratoire**
Schwingungsdämpfendes Lager
Hydraulic damping support

(30) Priorité: 28.05.1998 FR 9806723
(43) Date de publication de la demande: 01.12.1999
(73) Titulaire: HUTCHINSON, 75008 Paris (FR)
(72) Inventeur: Pizanti, Thierry, 28220 La Ferte Villeneuil (FR); Collet, Loic, 28160 Gohory (FR)
(74) Mandataire: Burbaud, Eric

(56) Documents cités:
- EP-A- 0 012 638
- EP-A- 0 800 017
- US-A- 2 535 080

## Description

La présente invention est relative aux supports antivibratoires.

Plus particulièrement, l'invention concerne un support antivibratoire destiné à être interposé entre deux éléments rigides pour amortir et atténuer des mouvements vibratoires entre ces deux éléments selon un axe central vertical et pour supporter une charge verticale permanente, exercée par l'un de ces deux éléments, ce support comportant :
- des première et deuxième armatures rigides, destinées à être solidarisées respectivement avec les deux éléments rigides à réunir,
- et un corps en élastomère reliant entre elles les deux armatures, ce corps en élastomère présentant une paroi latérale en forme de cloche qui s'étend axialement en divergeant depuis un sommet solidaire de la première armature jusqu'à une base annulaire solidaire de la deuxième armature, une plaque de base rigide solidaire de la deuxième armature s'étendant au centre de ladite base annulaire.

Le document FR-A-2 726 339 (voir les figures 13 à 15) décrit un support antivibratoire de ce type, dans lequel la paroi latérale du corps en élastomère comporte d'une part, deux faces mutuellement opposées relativement élancées, de faible résistance axiale, et d'autre part, deux faces mutuellement opposées moins élancées, qui reprennent l'essentiel de la charge verticale permanente.

Dans ce support antivibratoire connu, les deux faces élancées contribuent à diminuer la raideur dynamique du support, notamment vis-à-vis des vibrations de relativement haute fréquence (supérieure à 20 Hz et par exemple voisine de 150 Hz).

Le support antivibratoire divulgué dans le document susmentionné donne toute satisfaction, mais présente toutefois l'inconvénient que les effets dus à la souplesse des faces élancées de la paroi latérale sont gênés par les faces relativement épaisses et rigides de ladite paroi latérale.

Une solution à ce problème technique a déjà été proposée dans la demande de brevet français FR-A-2 756 342, déposée le 28 novembre 1996 et publiée après la date de priorité de la présente demande de brevet.

Dans cette solution, le corps en élastomère comporte un pied central qui reprend l'essentiel de la charge verticale permanente, ce qui permet d'augmenter la souplesse de l'ensemble de la paroi latérale du corps en élastomère, afin de mieux absorber les vibrations acoustiques.

Il est apparu utile de perfectionner encore cette solution technique, afin de faire en sorte que le pied central ne puisse pas se coucher, ou tout au moins puisse difficilement se coucher.

A cet effet, selon l'invention, un support antivibratoire du genre décrit dans le document FR-2 726 339 est essentiellement caractérisé :
en ce que le corps en élastomère comporte un pied central qui s'étend verticalement au centre de la paroi latérale depuis la première armature jusqu'au contact de la plaque de base,
et en ce que ladite paroi latérale du corps en élastomère est plus souple que le pied central dans la direction verticale, cette paroi latérale comportant de 2 à 6 nervures de renforcement qui s'étendent radialement vers l'extérieur chacune dans un plan vertical et qui sont réparties angulairement autour de la paroi latérale, ces nervures de renforcement étant séparées les unes et les autres par des portions plus minces et flexibles appartenant à ladite paroi latérale.

Grâce à ces dispositions, la paroi latérale du corps en élastomère peut présenter une grande souplesse d'ensemble, puisque la majeure partie de la charge permanente verticale peut être reprise par le pied central.

Cette souplesse confère au support antivibratoire une faible raideur dynamique vis-à-vis des vibrations de relativement petite amplitude (par exemple, inférieure à 1 mm) et de relativement grande fréquence (par exemple, supérieure à 20 Hz et notamment de l'ordre de 150 Hz).

Il en résulte une très bonne absorption de ces vibrations de grande fréquence, donc une meilleure isolation acoustique entre les premier et deuxième éléments rigides reliés par le support antivibratoire.

Enfin, les nervures de renforcement de la paroi latérale permettent de limiter le risque de voir le pied central se coucher sous l'effet conjugué de la charge verticale permanente et de déplacements horizontaux relatifs entre les premier et deuxième éléments rigides.

Dans des modes de réalisation préférés de l'invention, on peut éventuellement avoir recours en outre à l'une et/ou à l'autre des dispositions suivantes :
- les nervures de renforcement sont dimensionnées pour empêcher le pied central de se coucher sans augmenter sensiblement la raideur verticale du support ;
- le pied central est dimensionné pour ne pas flamber lorsque la charge verticale permanente est appliquée au support antivibratoire, la paroi latérale du corps en élastomère étant dimensionnée pour subir un flambage lorsque le support antivibratoire supporte ladite charge verticale permanente et pour présenter alors une raideur sensiblement nulle dans la direction verticale ;
- chacune des nervures de renforcement s'étend entre, d'une part, une extrémité supérieure solidaire du sommet de la paroi latérale, et d'autre part, une extrémité inférieure qui est solidarisée avec la deuxième armature ;
- chaque nervure de renforcement est dimensionnée pour que, lorsque le support antivibratoire supporte la charge verticale permanente, l'extrémité supérieure de ladite nervure se déforme en ayant tendance à s'enrouler partiellement sur elle-même pour plonger vers la deuxième armature ;
- chaque nervure de renforcement est dimensionnée pour que, lorsque le support antivibratoire supporte la charge verticale permanente, l'extrémité supérieure de ladite nervure de renforcement forme localement un angle aigu avec l'axe central, près du sommet de la paroi latérale ;
- la paroi latérale du corps en élastomère présente une surface intérieure qui s'étend en biais radialement vers l'extérieur et vers le bas à partir du pied central du corps en élastomère, et chaque nervure de renforcement a une épaisseur verticale, comprise entre ladite surface intérieure et l'extrémité supérieure de ladite nervure de renforcement, qui croît radialement vers l'extérieur à partir du pied central ;
- au moins une des nervures de renforcement présente une face de butée qui est orientée radialement vers l'extérieur, cette face de butée étant adaptée pour coopérer avec une contrebutée rigide qui est solidaire de la deuxième armature ;
- le pied central du corps en élastomère présente des nervures verticales réparties angulairement autour dudit pied, qui font saillie radialement vers l'extérieur ;
- chaque nervure verticale du pied s'étend depuis le sommet de la paroi latérale du corps en élastomère jusqu'à la plaque de base ;
- les nervures verticales du pied central sont disposées en correspondance avec les nervures de renforcement de la paroi latérale du corps en élastomère ;
- la plaque de base forme une cuvette ouverte vers le haut qui reçoit le pied central du corps en élastomère, ce pied central étant centré dans la cuvette au moyen desdites nervures verticales ;
- le pied central se prolonge vers le haut avec ses nervures verticales au-delà du sommet de la paroi latérale du corps en élastomère, jusqu'à la première armature ;
- la paroi latérale du corps en élastomère délimite une chambre de travail qui communique, par l'intermédiaire d'un passage étranglé, avec une chambre de compensation délimitée par une paroi souple, la chambre de travail formant avec la chambre de compensation et le passage étranglé un volume étanche rempli de liquide ;
- la plaque de base forme la deuxième armature et le corps en élastomère comprend la paroi souple de la chambre de compensation, qui est formée d'une seule pièce avec la paroi latérale en forme de cloche et le pied central, ce corps en élastomère étant appliqué de façon étanche contre la plaque de base pour délimiter avec celle-ci la chambre de travail, la chambre de compensation et le canal étranglé ;
- ce pied central constituant la partie de soutien susmentionnée et présentant, entre la première armature et la plaque de base, une certaine hauteur libre h ainsi qu'un certain diamètre équivalent d tels que le rapport h/d soit inférieur à 2,5 (le diamètre équivalent d peut-être soit le diamètre moyen du pied central si ce pied central présente une forme cylindrique de révolution, soit, de façon plus générale, valoir d=2(S/π)^{1/2}, où S est l'aire moyenne de la section horizontale du pied central).

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique montrant un véhicule automobile doté d'un support antivibratoire hydraulique selon une forme de réalisation de l'invention,
- la figure 2 est une vue en coupe verticale du support antivibratoire équipant le véhicule de la figure 1, lorsque aucune charge n'est appliquée à ce support,
- la figure 3 est une vue de dessous du corps en élastomère appartenant au support antivibratoire de la figure 2,
- la figure 4 est une vue en coupe verticale du support antivibratoire de la figure 2, la coupe étant prise selon la ligne brisée IV-IV de la figure 3,
- la figure 5 est une vue partielle similaire à la figure 4, montrant le support antivibratoire lorsqu'une charge verticale permanente lui est appliquée,
- et la figure 6 est un graphe montrant la relation entre l'effort axial P appliqué au support des figures 2 a 5 et la compression axiale x de ce support.

Sur les différentes figures, les mêmes références désignent des éléments identiques ou similaires.

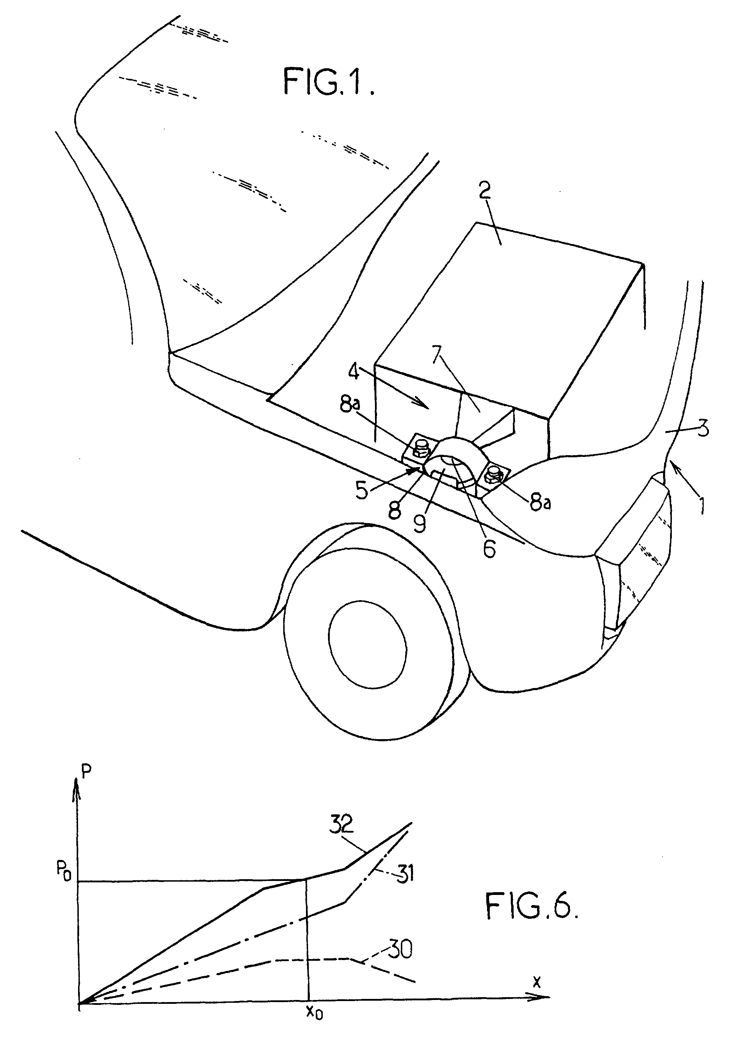

L'invention s'applique de préférence, mais non exclusivement, à un véhicule automobile 1 comportant un bloc motopropulseur 2 qui est supporté sur le châssis 3 du véhicule par l'intermédiaire de plusieurs dispositifs de fixation, dont l'un est visible sur la figure 1.

Ce dispositif de fixation 4 comprend un support antivibratoire hydraulique 5 qui présente :
- une première armature métallique rigide 6, fixée à un bras de support métallique rigide 7 qui est solidarisé avec le bloc motopropulseur 2,
- une deuxième armature métallique rigide 8, fixée au châssis 3 par des vis 8a ou autres,
- et un corps en élastomère 9 reliant entre elles les deux armatures 6 et 8.

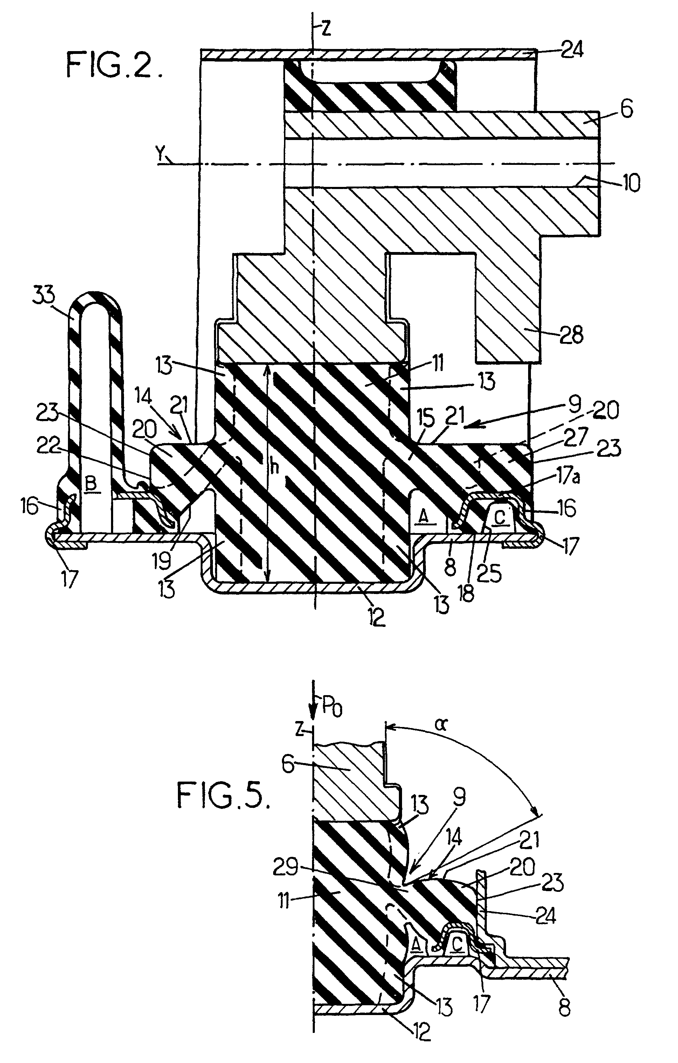

Comme représenté plus en détail sur les figures 2 à 4, la première armature 6 comporte un alésage 10 qui permet la fixation de ladite armature au bras 7 susmentionné, cet alésage 10 s'étendant selon un axe Y sensiblement horizontal.

La deuxième armature 8, quant à elle, se présente sous la forme d'une platine ou plaque de base de forme générale plane, s'étendant perpendiculairement à un axe central vertical Z qui représente, d'une part, la direction d'application du poids du groupe motopropulseur sur la première armature, et d'autre part, la direction principale des vibrations devant être amorties par le support antivibratoire 5.

Par ailleurs, le corps en élastomère 9 est moulé en une seule pièce et comporte tout d'abord un pied central 11 qui s'étend verticalement depuis la première armature 6 jusqu'à la platine 8, en s'engageant dans une cuvette 12 emboutie au centre de ladite platine.

Le pied central 11 comporte, dans l'exemple considéré, quatre nervures verticales 13 à arête arrondie (éventuellement au nombre de 3, ou plus généralement de 2 à 6), qui font saillie radialement vers l'extérieur et qui sont réparties autour dudit pied central, de façon à rigidifier ce pied central vis-à-vis de la flexion et à centrer ledit pied dans la cuvette 12.
Le pied central 11 présente, entre la première armature 6 et la platine 8, une certaine hauteur libre h ainsi qu'un certain diamètre équivalent d tels que le rapport h/d soit inférieur à 2,5, avantageusement inférieur à 2. Le diamètre équivalent d vaut d=2(S/π)^{1/2}, où S est l'aire moyenne de la section horizontale du pied central (y compris les nervures 13).

De plus le corps en élastomère 9 comporte en outre une paroi latérale 14 en forme de cloche qui s'étend entre d'une part, un sommet 15 solidarisé avec le pied central 11, en une position intermédiaire sur la hauteur dudit pied, et d'autre part, une base annulaire 16 du corps en élastomère qui est renforcée par une plaque métallique rigide 17. Cette plaque 17 est sertie sur le bord de la platine 8, pour que la face inférieure 18 de la base annulaire soit appliquée de façon étanche contre la face supérieure de ladite platine 8.

La paroi latérale 14 définit ainsi, entre sa face intérieure tronconique 19 et la platine 8, une chambre de travail A remplie de liquide

De plus cette paroi latérale 14 présente, dans l'exemple considéré, quatre nervures de renforcement 20 disposées en correspondance avec les nervures 13, qui font saillie radialement vers l'extérieur et qui s'étendent chacune dans un plan vertical entre une extrémité supérieure 21 solidaire du sommet de la paroi latérale 14 et une extrémité inférieure 22 solidaire de la base 16 du corps en élastomère. Ces nervures 20 sont séparées les unes des autres par des portions plus minces de la paroi latérale 14. Les nervures 20 pourraient éventuellement être au nombre de 3, ou plus généralement de 2 à 6.

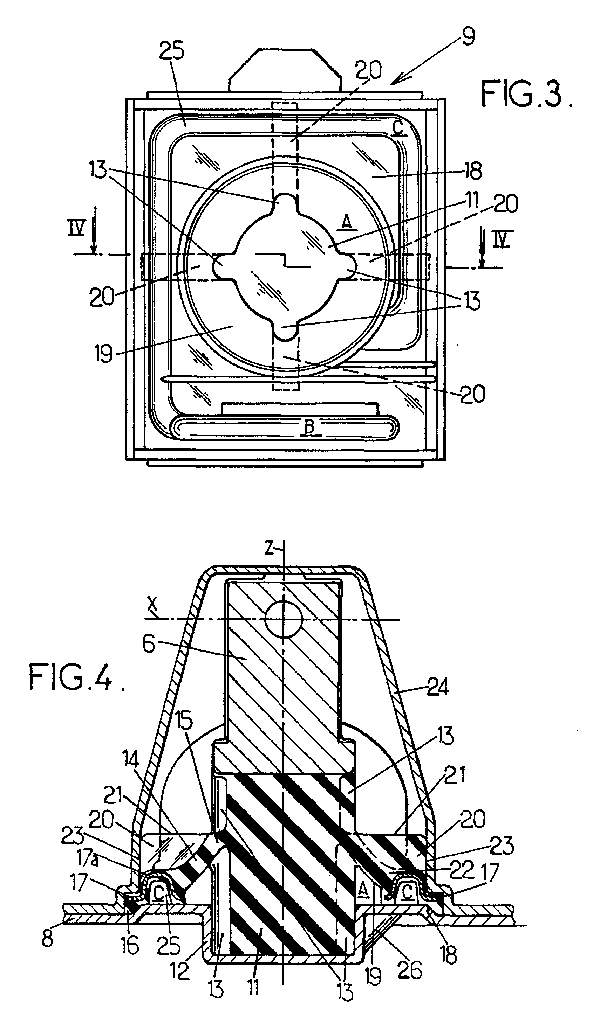

Comme on peut le voir en particulier sur la figure 4, l'extrémité supérieure 21 de chaque nervure de renforcement 20 forme une face supérieure sensiblement horizontale, qui s'étend radialement vers l'extérieur depuis le pied central 11 jusqu'à une face 23 extérieure s'étendant sensiblement verticalement.

Les nervures de renforcement 20 permettent de rigidifier la paroi latérale 14 dans le plan horizontal, de façon à empêcher le pied central 11 de ce coucher lorsque les première et deuxième armatures 6,8 subissent des mouvements relatifs horizontaux.

Dans l'exemple considéré, cet effet de rigidification dans le plan horizontal est spécialement important parallèlement à un axe horizontal X qui est perpendiculaire aux axes Y et Z susmentionnés, puisque les deux nervures de renforcement 20 qui sont alignées parallèlement à l'axe X sont encadrées par un capot rigide 24 en forme d'arceau qui est solidarisé avec la platine 8 et qui limite par ailleurs les débattements de la première armature 6. Les faces extérieures verticale 23 de ces deux nervures de renforcement forment ainsi des faces de butée qui s'appuient horizontalement sur ledit capot 24.

Par ailleurs, le corps en élastomère 9 comporte en outre une paroi mince et aisément déformable 33 qui présente également une forme de cloche ouverte vers le bas et qui s'étend depuis un sommet jusqu'à la base 16 du corps en élastomère, en délimitant avec la platine 8 une chambre de compensation B remplie de liquide.

Dans la face inférieure 18 de la base du corps en élastomère est également creusée une gorge 25 qui délimite avec la platine 8 un canal étranglé C dont la forme est au moins partiellement définie par un embouti 17a de la plaque ajourée 17.

Ce canal étranglé communique avec les chambres de travail A et de compensation B, la communication avec la chambre de travail A se faisant par l'intermédiaire d'un embouti 26 ménagé dans la platine 8 (voir figure 4).

Enfin, dans le mode de réalisation particulier représenté sur les dessins, le corps en élastomère 9 comporte un bossage 27 relativement massif qui coopère avec une butée 28 faisant saillie vers le bas à partir de la première armature 6 pour limiter les débattements de ladite première armature vers le bas.

Avantageusement, la nervure de renforcement 20 qui est disposée en correspondance avec le bossage 27 s'étend jusqu'à ce bossage, ce qui augmente la raideur horizontale de cette nervure de renforcement.

Le dispositif qui vient d'être décrit fonctionne comme suit.

Lorsque le poids du groupe motopropulseur est appliqué sur la première armature 6, le pied central 11 du support antivibratoire se comprime axialement sans flamber, c'est-à-dire sans perdre ses caractéristiques de raideur axiale, comment représenté sur la figure 5.

En revanche, la paroi latérale 14 du corps en élastomère est comprimée verticalement jusqu'à son point de flambage, c'est-à-dire jusqu'à un point où sa raideur axiale (pente locale de la courbe effort - déplacement) devient sensiblement nulle.

Ce phénomène de flambage, dont l'utilité sera vue plus loin, peut avoir lieu malgré la présence des nervures de renforcement 21 :
- du fait que ces nervures de renforcement sont rattachées au pied central 11 par une partie radialement intérieure 29 qui présente une épaisseur verticale relativement faible, cette épaisseur croissant radialement vers l'extérieur à partir de ladite portion intérieure,
- et du fait que la partie intérieure 29 des nervures 20 a tendance à s'enrouler sur elle-même contre le pied central 11 en plongeant vers la platine 8 lors de l'application du poids du groupe motopropulseur, en formant localement un angle aigu α entre l'extrémité supérieure 21 de la nervure et l'axe Z, cet effet d'enroulement permettant d'obtenir une raideur verticale faible, et avantageusement sensiblement nulle, des nervures 20.

Le phénomène de flambage que subit la paroi latérale 14 est illustré par le graphe représenté sur la figure 6, qui montre trois courbes 30, 31, 32 représentatives respectivement de la relation entre la force axiale P appliquée à la première armature et le déplacement axial x de la première armature vers le bas, respectivement pour la paroi latérale 14 seule (courbe 30), pour le pied central 11 seul (courbe 31) et pour l'ensemble du corps en élastomère 9 (courbe 32).

La courbe 30 [P1(x)] relative à la paroi latérale 14 comporte initialement une partie linéaire croissante, puis un palier sensiblement horizontal qui correspond au flambage de la paroi latérale 14 (la paroi latérale 14 présente alors une raideur verticale dP1/dx sensiblement nulle, mais supporte encore un certain effort vertical), puis une partie décroissante.

En revanche, la courbe 31 [P2(x)] relative au pied 11 comporte uniquement une première partie linéaire croissante qui se prolonge au moins jusqu'à la fin du palier horizontal de la courbe 30, puis une deuxième partie linéaire croissante de pente très importante, correspondant à la raideur de confinement du pied central 11.

Enfin, la courbe 32 relative à l'ensemble du support antivibratoire correspond à une fonction P(x)=P1 (x)+P2 (x) .

Cette courbe 32 présente :
- une partie initiale linéaire ayant une pente relativement élevée, c'est-à-dire correspondant à une raideur (dP/dx) relativement élevée, par exemple de l'ordre de 150 N/mm,
- une partie intermédiaire linéaire qui correspond au palier de la courbe 30 et qui présente une pente relativement faible, c'est-à-dire correspondant à une raideur faible par exemple de l'ordre de 80 N/mm,
et enfin une partie terminale linéaire de pente élevée, correspondant à la deuxième partie de la courbe 31.

Lorsque le poids du groupe motopropulseur est appliqué au support antivibratoire 5, ce qui se traduit par l'application d'une charge permanente P0 comprise par exemple entre 500 et 2500 N (Newton), ledit support subit une compression x0 telle que le point de coordonnée (P0, x0) se trouve sur la partie intermédiaire de la courbe 32, de faible pente.

Autrement dit, lorsque le poids du groupe motopropulseur est appliqué au support antivibratoire, la paroi latérale 14, qui se trouve dans un état de flambage, reprend encore une partie de l'effort P0, mais ne participe plus à la raideur axiale du support antivibratoire vis-à-vis des vibrations verticales subies par ce support autour de son point d'équilibre.

Cette faible raideur dynamique permet une excellente absorption des vibrations de relativement haute fréquence, notamment dans le domaine acoustique.

Par ailleurs, le support antivibratoire 5 amortit les mouvements vibratoires de relativement basse fréquence (par exemple inférieure à 20 Hz) et de relativement grande amplitude (par exemple supérieure à 1 mm) entre le groupe motopropulseur 2 et le châssis 3 du véhicule, par transfert de liquide entre la chambre de travail A et la chambre de compensation B au travers du passage étranglé C, comme cela est bien connu dans l'état de la technique.

## Revendications

1. Support antivibratoire destiné à être interposé entre deux éléments rigides (2, 3) pour amortir et atténuer des mouvements vibratoires entre ces deux éléments selon un axe central vertical (Z) et pour supporter une charge verticale permanente (P0), exercée par l'un de ces deux éléments, ce support comportant :
- des première et deuxième armatures rigides (6, 8), destinées à être solidarisées respectivement avec les deux éléments rigides à réunir,
- et un corps en élastomère (9) reliant entre elles les deux armatures, ce corps en élastomère présentant une paroi latérale (14) en forme de cloche qui s'étend axialement en divergeant depuis un sommet (15) solidaire de la première armature jusqu'à une base annulaire (16) solidaire de la deuxième armature, une plaque de base rigide (8) solidaire de la deuxième armature s'étendant au centre de ladite base annulaire du corps en élastomère,
**caractérisé en ce que** le corps en élastomère comporte un pied central (11) qui s'étend verticalement au centre de la paroi latérale (14) depuis la première armature (6) jusqu'au contact de la plaque de base (8),
et **en ce que** ladite paroi latérale du corps en élastomère est plus souple que le pied central (11) dans la direction verticale, cette paroi latérale comportant de 2 à 6 nervures de renforcement (20) qui s'étendent radialement vers l'extérieur chacune dans un plan vertical et qui sont réparties angulairement autour de la paroi latérale (14), ces nervures de renforcement étant séparées les unes et les autres par des portions plus minces et flexibles appartenant à ladite paroi latérale.

2. Support antivibratoire selon la revendication 1, dans lequel les nervures de renforcement (20) sont dimensionnées pour empêcher le pied central de se coucher sans augmenter sensiblement la raideur verticale du support.

3. Support antivibratoire selon la revendication 1 ou la revendication 2, dans lequel le pied central est dimensionné pour ne pas flamber lorsque la charge verticale permanente (P0) est appliquée au support antivibratoire, la paroi latérale (14) du corps en élastomère étant dimensionnée pour subir un flambage lorsque le support antivibratoire supporte ladite charge verticale permanente et pour présenter alors une raideur dynamique sensiblement nulle dans la direction verticale.

4. Support antivibratoire selon l'une quelconque des revendications 1 et 2, dans lequel, chacune des nervures de renforcement (20) s'étend entre, d'une part, une extrémité supérieure (21) solidaire du sommet (15) de la paroi latérale, et d'autre part, une extrémité inférieure (22) qui est solidarisée avec la deuxième armature (8).

5. Support antivibratoire selon l'une quelconque des revendications précédentes, dans lequel chaque nervure de renforcement (20) est dimensionnée pour que, lorsque le support antivibratoire supporte la charge verticale permanente (P0), l'extrémité supérieure (21) de ladite nervure se déforme en ayant tendance à s'enrouler partiellement sur elle-même pour plonger vers la deuxième armature (8).

6. Support antivibratoire selon l'une quelconque des revendications précédentes, dans lequel chaque nervure de renforcement (20) est dimensionnée pour que, lorsque le support antivibratoire supporte la charge verticale permanente (P0), l'extrémité supérieure (21) de ladite nervure de renforcement forme localement un angle aigu (α) avec l'axe central (Z), près du sommet de la paroi latérale (14).

7. Support antivibratoire selon l'une quelconque des revendications précédentes, dans lequel la paroi latérale (14) du corps en élastomère présente une surface intérieure (19) qui s'étend en biais radialement vers l'extérieur et vers le bas à partir du pied central (11) du corps en élastomère, et chaque nervure de renforcement a une épaisseur verticale, comprise entre ladite surface intérieure (19) et l'extrémité supérieure (21) de ladite nervure de renforcement, qui croît radialement vers l'extérieur à partir du pied central.

8. Support antivibratoire selon l'une quelconque des revendications précédentes, dans lequel au moins une des nervures de renforcement (20) présente une face de butée (23) qui est orientée radialement vers l'extérieur, cette face de butée étant adaptée pour coopérer avec une contrebutée rigide (24) qui est solidaire de la deuxième armature (8).

9. Support antivibratoire selon l'une quelconque des revendications précédentes, dans lequel le pied central (11) du corps en élastomère présente des nervures verticales (13) réparties angulairement autour dudit pied, qui font saillie radialement vers l'extérieur.

10. Support antivibratoire selon la revendication 9, dans lequel chaque nervure verticale (13) du pied s'étend depuis le sommet (15) de la paroi latérale du corps en élastomère jusqu'à la plaque de base (8).

11. Support antivibratoire selon la revendication 9 ou la revendication 10, dans lequel les nervures verticales (13) du pied central sont disposées en correspondance avec les nervures de renforcement (20) de la paroi latérale du corps en élastomère.

12. Support antivibratoire selon l'une quelconque des revendications 9 à 11, dans lequel la plaque de base (8) forme une cuvette (12) ouverte vers le haut qui reçoit le pied central (11) du corps en élastomère, ce pied central étant centré dans la cuvette au moyen desdites nervures verticales (13).

13. Support antivibratoire selon l'une quelconque des revendications 9 à 12, dans lequel le pied central (11) se prolonge vers le haut avec ses nervures verticales (13) au-delà du sommet (15) de la paroi latérale du corps en élastomère, jusqu'à la première armature (6).

14. Support antivibratoire selon l'une quelconque des revendications précédentes, dans lequel la paroi latérale (14) du corps en élastomère délimite une chambre de travail (A) qui communique, par l'intermédiaire d'un passage étranglé (C), avec une chambre de compensation (B) délimitée par une paroi souple (33), la chambre de travail (A) formant avec la chambre de compensation (B) et le passage étranglé (C) un volume étanche rempli de liquide.

15. Support antivibratoire selon la revendication 14, dans lequel la plaque de base (8) forme la deuxième armature et le corps en élastomère comprend la paroi souple (33) de la chambre de compensation, qui est formée d'une seule pièce avec la paroi latérale (14) en forme de cloche et le pied central (11), ce corps en élastomère étant appliqué de façon étanche contre la plaque de base (8) pour délimiter avec celle-ci la chambre de travail (A), la chambre de compensation (B) et le canal étranglé (C) .

16. Support antivibratoire selon l'une quelconque des revendications précédentes, dans lequel le pied central présente, entre la première armature (6) et la plaque de base (8), une certaine hauteur libre h ainsi qu'un certain diamètre équivalent d tels que le rapport h/d soit inférieur à 2,5.

## Claims

1. An anti-vibration support intended to be interposed between two rigid components (2, 3) to dampen and attenuate vibrations between these two components along a vertical central axis (Z) and to support a continuous vertical load (P0), exerted by one of these two components, this support comprising:
- first and second rigid armatures (6, 8), intended to be fixed respectively to the two rigid components to be connected,
- and an elastomer body (9) connecting the two armatures to each other, this elastomer body having a bell-shaped side wall (14) extending axially by diverging from a top (15) integral with the first armature to an annular base (16) integral with the second armature, a rigid baseplate (8) integral with the second armature extending to the centre of said elastomer body annular base,
**characterised in that** the elastomer body comprises a central foot (11) extending vertically to the centre of the side wall (14) from the first armature (6) to the contact with the baseplate (8),
and **in that** said elastomer body side wall is more flexible than the central foot (11) in the vertical direction, this side wall comprising from 2 to 6 reinforcement ribs (20) which extend radially outwards each in a vertical plane and which are distributed angularly around the side wall (14), these reinforcement ribs being separated from each other by thinner and flexible portions belonging to said side wall.

2. An anti-vibration support according to claim 1, wherein the reinforcement ribs (20) are sized so as to prevent the central foot from keeling over without markedly increasing the vertical rigidity of the support.

3. An anti-vibration support according to claim 1 or claim 2, wherein the central foot is sized so as not to buckle when the continuous vertical load (P0) is applied to the anti-vibration support, the elastomer body side wall (14) being sized to withstand buckling when the anti-vibration support bears said continuous vertical load and in this event to have approximately zero rigidity in the vertical direction.

4. An anti-vibration support according to any one of claims 1 and 2, wherein each of the reinforcement ribs (20) extends between, on the one hand, an upper end (21) integral with the top (15) of the side wall, and on the other hand, a lower end (22) which is fixed to the second armature (8).

5. An anti-vibration support according to any one of the previous claims, wherein each reinforcement rib (20) is sized so that, when the anti-vibration support bears the continuous vertical load (P0), the upper end (21) of said rib bends with a tendency to coil up partially on itself to dip towards the second armature (8).

6. An anti-vibration support according to any one of the previous claims, wherein each reinforcement rib (20) is sized so that, when the anti-vibration support bears the continuous vertical load (P0), the upper end (21) of said reinforcement rib forms locally an acute angle (α) with the central axis (Z), near the top of the side wall (14).

7. An anti-vibration support according to any one of the previous claims, wherein the elastomer body side wall (14) has an inner surface (19) extending at an angle radially outwards and downwards from the central foot (11) of the elastomer body, and each reinforcement rib has a vertical thickness, between said inner surface (19) and the upper end (21) of said reinforcement rib, which grows radially outwards from the central foot.

8. An anti-vibration support according to any one of the previous claims, wherein at least one of the reinforcement ribs (20) has a stop face (23) which is orientated radially outwards, this stop face being adapted to engage with a rigid counter stop (24) which is integral with the second armature (8).

9. An anti-vibration support according to any one of the previous claims, wherein the central foot (11) of the elastomer body has vertical ribs (13) distributed angularly around said foot, which project radially outwards.

10. An anti-vibration support according to claim 9, wherein each vertical rib (13) of the foot extends from the top (15) of the elastomer body side wall to the baseplate (8).

11. An anti-vibration support according to claim 9 or claim 10, wherein the vertical ribs (13) of the central foot are placed in correspondence with the reinforcement ribs (20) of the elastomer body side wall.

12. An anti-vibration support according to any one of claims 9 to 11, wherein the baseplate (8) forms an upwardly open trough (12) which receives the central foot (11) of the elastomer body, this central foot being centred in the trough by means of said vertical ribs (13).

13. An anti-vibration support according to any one of claims 9 to 12, wherein the central foot (11) extends upwards with its vertical ribs (13) beyond the top (15) of the elastomer body side wall, as far as the first armature (6).

14. An anti-vibration support according to any one of the previous claims, wherein the elastomer body side wall (14) delimits a work chamber (A) which communicates, by means of a choked passage (C), with a surge chamber (B) delimited by a flexible wall (33), the work chamber (A) forming with the surge chamber (B) and the choked passage (C) a sealed volume filled with liquid.

15. An anti-vibration support according to claim 14, wherein the baseplate (8) forms the second armature and the elastomer body includes the flexible wall (33) of the surge chamber, which is formed in a single piece with the bell-shaped side wall (14) and the central foot (11), this elastomer body being applied in a sealed way against the baseplate (8) so as to delimit with it the work chamber (A), the surge chamber (B) and the choked channel (C).

16. An anti-vibration support according to any one of the previous claims, wherein the central foot has, between the first armature (6) and the baseplate (8), a certain free height h and a certain equivalent diameter d such that the h/d ratio is less than 2.5.

## Patentansprüche

1. Schwingungsdämpfendes Lager, das dazu vorgesehen ist, zwischen zwei starren Elementen (2, 3) angeordnet zu werden, um Schwingbewegungen zwischen diesen beiden Elementen in der Richtung einer vertikalen Mittelachse (Z) zu dämpfen und um eine Dauerlast (P0) zu tragen, die von einem dieser beiden Elemente ausgeübt wird, wobei dieses Lager aufweist:
- eine erste und eine zweite starre Halterung (6, 8), die dazu gedacht sind, entsprechend mit den beiden zu verbindenden starren Elementen fest verbunden zu werden,
- und einen Elastomerkörper (9), der die beiden Halterungen miteinander verbindet, wobei dieser Elastomerkörper eine glockenförmige Seitenwand (14) aufweist, die sich in axialer Richtung erstreckt und sich dabei von einer mit der ersten Halterung fest verbundenen Spitze (15) bis zu einer mit der zweiten Halterung fest verbundenen ringförmigen Basis (16) ausweitet, wobei sich eine starre Basisplatte (8), die mit der zweiten Halterung fest verbunden ist, in der Mitte dieser ringförmigen Basis des Elastomerkörpers erstreckt,
**dadurch gekennzeichnet,**
**dass** der Elastomerkörper einen zentralen Fuß (11) hat, der sich vertikal in der Mitte der Seitenwand (14) von der ersten Halterung (6) bis in Kontakt mit der Basisplatte (8) erstreckt, und dass diese Seitenwand des Elastomerkörpers in vertikaler Richtung nachgiebiger ist als der zentrale Fuß (11), wobei diese Seitenwand 2 bis 6 Verstärkungsrippen (20) enthält, die sich jeweils in einer vertikalen Ebene radial nach außen erstrecken und winkelmäßig um die Seitenwand (14) herum verteilt angeordnet sind, wobei diese Verstärkungsrippen voneinander durch dünnere und biegsamere Abschnitte getrennt werden, die zu dieser Seitenwand gehören.

2. Schwingungsdämpfendes Lager nach Anspruch 1, bei dem die Verstärkungsrippen (20) so bemessen sind, dass sie verhindern, dass der zentrale Fuß sich umlegt, ohne dass dabei die vertikale Steife des Lagers wesentlich erhöht wird.

3. Schwmgungsdämpfendes Lager nach Anspruch 1 oder 2, bei dem der zentrale Fuß so bemessen ist, dass er sich nicht biegt, wenn die vertikale Dauerlast (P0) auf das schwingungsdämpfende Lager gebracht wird, wobei die Seitenwand (14) des Elastomerkörpers so bemessen ist, dass sie ein Biegen aushält, wenn das schwingungsdämpfende Lager diese vertikale Dauerlast trägt, und dass sie dann in vertikaler Richtung eine dynamische Steife von im wesentlichen Null aufweist.

4. Schwingungsdämpfendes Lager nach einem der Ansprüche 1 und 2, bei dem sich jede der Verstärkungsrippen (20) zwischen einem oberen Ende (21), das mit der Spitze (15) der Seitenwand fest verbunden ist, einerseits und einem unteren Ende (22), das mit der zweiten Halterung (8) fest verbunden ist, andererseits erstreckt.

5. Schwingungsdämpfendes Lager nach einem der vorherigen Ansprüche, bei dem jede Verstärkungsrippe (20) so bemessen ist, dass, wenn das schwingungsdämpfende Lager die vertikale Dauerlast (P0) trägt, das obere Ende (21) der genannten Rippe sich verformt, wobei es die Tendenz zeigt, sich teilweise in sich selbst einzurollen und sich so zu der zweiten Halterung (8) hin abzusenken.

6. Schwingungsdämpfendes Lager nach einem der vorherigen Ansprüche, bei dem jede Verstärkungsrippe (20) so bemessen ist, dass, wenn das schwingungsdämpfende Lager die vertikale Dauerlast (P0) trägt, das obere Ende (21) dieser Verstärkungsrippe an einer Stelle nahe bei der Spitze der Seitenwand (14) einen spitzes Winkel (α) mit der Mittelachse (Z) bildet.

7. Schwingungsdämpfendes Lager nach einem der vorherigen Ansprüche, bei dem die Seitenwand (14) des Elastomerkörpers eine Innenfläche (19) aufweist, die sich von dem zentralen Fuß (11) des Elastomerkörpers schräg in radialer Richtung nach außen und nach unten erstreckt, und jede Verstärkungsrippe eine vertikale Stärke hat, die zwischen dieser Innenfläche (19) und dem oberen Ende (21) dieser Verstärkungsrippe liegt und von dem zentralen Fuß radial nach außen wächst.

8. Schwingungsdämpfendes Lager nach einem der vorherigen Ansprüche, bei dem wenigstens eine der Verstärkungsrippen (20) eine Anschlagseite (23) aufweist, die radial nach außen gekehrt ist, wobei diese Anschlagseite geeignet ist, mit einem starren Gegenanschlag (24) zusammenzuwirken, der mit der zweiten Halterung (8) fest verbunden ist.

9. Schwingungsdämpfendes Lager nach einem der vorherigen Ansprüche, bei dem der zentrale Fuß (11) des Elastomerkörpers vertikale Rippen (13) aufweist, die winkelmäßig um diesen Fuß herum verteilt angeordnet sind und radial nach außen hervorstehen.

10. Schwingungsdämpfendes Lager nach Anspruch 9, bei dem sich jede vertikale Rippe (13) des Fußes von der Spitze (15) der Seitenwand des Elastomerkörpers bis zur Basisplatte (8) erstreckt.

11. Schwingungsdämpfendes Lager nach Anspruch 9 oder 10, bei dem die vertikalen Rippen (13) des zentralen Fußes im Anschluss an die Verstärkungsrippen (20) der Seitenwand des Elastomerkörpers angeordnet sind.

12. Schwingungsdämpfendes Lager nach einem der Ansprüche 9 bis 11, bei dem die Basisplatte (8) ein nach oben offenes Becken (12) bildet, das den zentralen Fuß (11) des Elastomerkörpers aufnimmt, wobei dieser zentrale Fuß mittels der vertikalen Rippen (13) in dem Becken zentriert wird.

13. Schwingungsdämpfendes Lager nach einem der Ansprüche 9 bis 12, bei dem sich der zentrale Fuß (11) mit seinen vertikalen Rippen (13) nach oben über die Spitze (15) der Seitenwand des Elastomerkörpers bis zur ersten Halterung (6) fortsetzt.

14. Schwingungsdämpfendes Lager nach einem der vorherigen Ansprüche, bei dem die Seitenwand (14) des Elastomerkörpers eine Arbeitskammer (A) abgrenzt, die über einen engen Durchlass (C) mit einer Ausgleichskammer (B) kommuniziert, welche von einer weichen Wand (33) umgrenzt wird, wobei die Arbeitskammer (A) mit der Ausgleichskammer (B) und dem engen Durchlass (C) zusammen einen dichten Raum bildet, der mit Flüssigkeit gefüllt ist.

15. Schwingungsdämpfendes Lager nach Anspruch 15, bei dem die Basisplatte (8) die zweite Halterung bildet und der Elastomerkörper die weiche Wand (33) der Ausgleichskammer (B) umfasst, die in einem Stück mit der glockenförmigen Seitenwand (14) und dem zentralen Fuß (11) geformt ist, wobei dieser Elastomerkörper mit Dichtigkeit auf die Basisplatte (8) gedrückt wird, um mit dieser zusammen die Arbeitskammer (A), die Ausgleichskammer (B) und den engen Durchlass (C) zu umgrenzen.

16. Schwingungsdämpfendes Lager nach einem der vorherigen Ansprüche, bei dem zentrale Fuß zwischen erster Halterung (6) und Basisplatte (8) eine bestimmte freie Höhe h sowie einen bestimmten Äquivalentdurchmesser d dergestalt aufweist, dass das Verhältnis h/d kleiner ist als 2,5.
